# EUROPEAN PATENT SPECIFICATION

(11) **EP 0 873 975 B1**
(45) Date of publication and mention of the grant of the patent: **29.01.2003**
(21) Application number: 98106980.0
(22) Date of filing: 17.04.1998
(51) Int. Cl.: C03B 7/10, C03B 9/41

(54) **Gob arrival timing in an individual section machine glassware forming system**
System zur Bestimmung der Ankunftszeit von Glastropfen bei der Herstellung von Glasrartikeln in einer IS-Maschine
Timing d'arrivée d'une paraison dans une machine I.S. pour la fabrication d'objets en verre

(30) Priority: 21.04.1997 US 840966
(43) Date of publication of application: 28.10.1998
(73) Proprietor: OWENS-BROCKWAY GLASS CONTAINER INC., Toledo, Ohio 43666 (US)
(72) Inventor: Hayes, Dan M., Waterville, OH 43566 (US); Schwartz, Stephen M., Toledo, OH 43617 (US); Slifco, John M., Toledo, OH 43615 (US); Welker, Mathias P., Toledo, OH 43612 (US)
(74) Representative: Blumbach, Kramer & Partner GbR

(56) References cited:
- US-A- 4 362 544
- US-A- 4 459 146

## Description

The present invention is directed to a glassware forming system including an individual section (IS) machine.

### Background and Objects of the Invention

The art of glass container manufacture is currently dominated by the so-called individual section or IS machine. Such machines include a plurality of separate or individual manufacturing sections, each of which has a multiplicity of operating mechanisms for converting one or more charges or gobs of molten glass into hollow glass containers and transferring the containers through successive stages of the machine section. In general, an IS machine system includes a glass source with a needle mechanism for controlling a stream of molten glass, a sheer mechanism for cutting the molten glass stream into individual gobs and a gob distributor for distributing the individual gobs among the individual machine sections. Each machine section includes one or more blank molds in which a glass gob is initially formed into a parison in a blowing or pressing operation, one or more invert arms for transferring the parisons to blow molds in which the containers are blown to final form, tongs for removing the formed containers onto a deadplate, and a sweepout mechanism for transferring molded containers from the deadplate to a cross conveyor. The conveyor receives containers from all sections of an IS machine, and conveys the containers to a loader for transfer to an annealing lehr. Operating mechanisms in each section also provide for closure of mold halves, movement of baffles and blowing nozzles, control of cooling wind, etc.

An individual section machine according to the preamble of claim 1 is known from US-A-4.362,544 which includes a background discussion of the art of both "blow and blow" and "press and blow" glassware forming processes, and also discusses an electropneumatic individual section machine adapted for use in either process.

Gobs of molten glass are prepared by cutting streams of molten glass into pieces and such gobs are distributed to the individual sections of the glass forming machine. The timing of the arrival of the molten glass gobs at the blank or parison molds of each machine section is a critical element of system operation. Gob arrival timing can vary significantly due to a number of factors, such as dirt accumulation and/or coating wear along the scoops, troughs and deflectors of the gob distributor system. Late arrival of a glass gob at a blank mold can cause serious mold damage requiring extensive machine downtime for repair, and can generate so-called tramp glass that may contaminate glassware formed in adjacent machine sections. It has heretofore been proposed to sense arrival of glass gobs at the individual blank molds, and to initiate mold closure and a section operating cycle upon arrival of the glass gobs. However, such an arrangement is unduly complex and not well suited for multiple-section machine systems in which timing must be coordinated among the several machine sections.

It is therefore a general object of the present invention to provide a system for measuring gob arrival timing at the multiple sections of an individual section glassware forming system, and for controlling section operation in the event of late gob arrival in such a way as to prevent mold damage and generation of tramp glass while completing the operating cycle of that section, and without affecting operation of other sections on the machine. Another and related object of the present invention is to provide a system of the described character that facilitate evaluation of the gob delivery equipment for dirt buildup, coating wear or other gradual deterioration so that the gob delivery equipment can be repaired before gob delivery timing deterioration becomes critical.

### Summary of the Invention

The invention is defined in claim 1.

A glassware forming system includes an individual section (IS) machine and a gob distributor for delivering glass gobs to individual machine sections in sequence. Blank molds are provided at each machine section for forming gobs into blanks and blow molds at each machine section for forming the blanks into hollow glass containers. The novel system includes apparatus for measuring gob travel time to each machine section and terminating operation of a section in the event of an imminent gob misload. The system comprises gob sensors and associated electronics for measuring gob travel time so as to determine gob arrival timing at each machine section. The gob arrival timing so determined is compared to a preset shut-down limit at each machine section. Operation of the blank molds at a machine section is immediately terminated when gob arrival timing at that section exceeds the preset limit, while the blow molds and ware transfer mechanisms for that section are permitted to complete an operating cycle. In this way, damage to the blank molds and generation of tramp glass are prevented while the section is cleared of acceptable glassware. After the potentially misloaded glass is cleared and any necessary repairs are made, the machine section may be restarted employing normal restart techniques. Operation at the other machine sections continues without interruption.

In implementing the invention, gob sensors are positioned at the gob distributor and at each machine section for sensing arrival timing of glass gobs at the gob distributor and the blank molds of that section. An electronic controller is coupled to all of the gob sensors for measuring gob travel time from the gob distributor to each of the blank molds in each section. When the gob travel time between the gob distributor and a blank mold in any machine section exceeds a preselected limit, operation of the blank molds at that section is immediately terminated while the pending cycle of operation at the blow molds is completed. The gob arrival timing information is stored over a plurality of machine cycles, and the information so stored is evaluated for determining condition of the gob delivery mechanism. This is accomplished by determining both average gob travel time at each blank mold of each machine section and standard deviation of such timing at each blank mold of each machine section, and displaying such information on command to an operator for evaluation. In this way. deteriorating conditions at any gob delivery path can be identified in advance of machine shut-down.

### Brief Description of the Drawings

The invention, together with additional objects, features and advantages thereof, will be best understood from the following description, the appended claims and the accompanying drawings in which:
FIG. 1 is a functional block diagram of an individual section machine glassware forming system in connection with which the present invention preferably is implemented;
FIG. 2 is a more detailed functional block diagram of a portion of the system illustrated in FIG. 1;
FIG. 3 is a functional block diagram of a gob arrival timing and machine control system in accordance with one presently preferred embodiment of the invention; and
FIG. 4 is a representative display of gob arrival timing for operator evaluation.

### Detailed Description of Preferred Embodiments

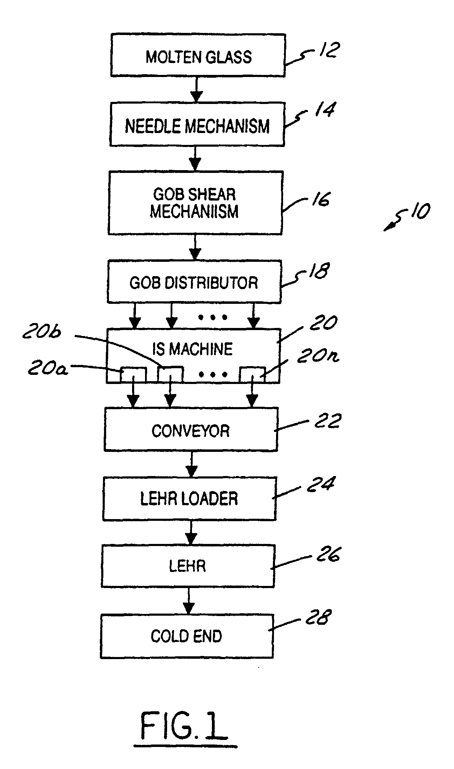

FIG 1 illustrates an IS machine glassware forming system 10 as comprising a reservoir or bowl 12 containing molten glass (from a forehearth) that is fed by a needle mechanism 14 to a shear mechanism 16. Shear mechanism 16 severs individual gobs of molten glass, which are fed by a gob distributor 18 to an IS machine 20. IS machine 20 includes a plurality of individual sections within which the gobs are formed into individual pieces of glassware. Each section terminates in a sweepout station (34), from which the articles of glassware are delivered to a common cross conveyor 22. Conveyor 22, usually an endless belt conveyor, delivers the containers in sequence to a lehr loader 24, which loads the containers in batches into an annealing lehr 26. The containers are delivered by lehr 26 to the so-called cold end 28 of the manufacturing cycle, at which the containers are inspected for commercial variations, sorted, labeled, packaged and/or stored for further processing.

System 10 illustrated in FIG. 1 includes a multiplicity of operating mechanisms for performing operations on the glass, moving glass workpieces through sequential stages of operation, and otherwise performing functions in the system. Such operating mechanisms include, for example, needle mechanism 14, gob shear mechanism 16, gob distributor 18 and lehr loader 24. In addition, there are a multiplicity of operating mechanisms within each section of IS machine 20, such as mechanisms for opening and closing the molds, mechanisms for in and out motions of the funnels, baffles and blow heads, mechanisms for motions of the invert arms and take-out tongs, and sweepout mechanisms for moving the ware onto cross conveyor 22.

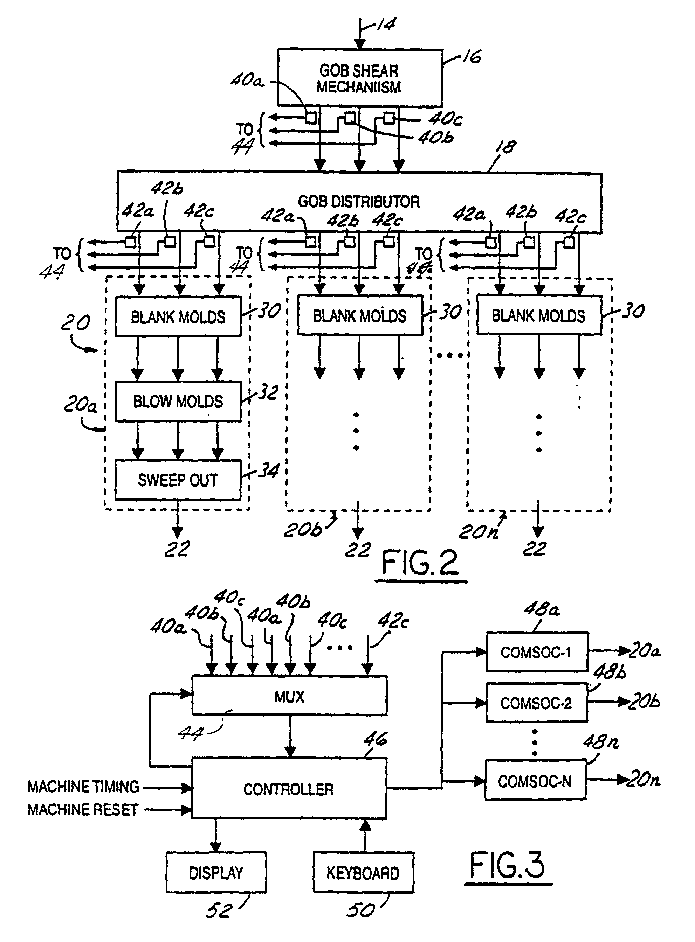

Referring to FIG. 2. IS machine 20 includes a plurality of individual sections 20a. 20b...20n. Each individual section includes at least one and preferably a plurality of blank molds 30 that receive glass gobs simultaneously from gob distributor 18. In the particular exemplary system illustrated in the drawings and herein discussed, machine 20 comprises a so-called triple-gob machine, in which each machine section includes three sets of blank molds 30 and three sets of blow molds 32 for operating simultaneously on three glass gobs to produce three pieces of glassware. So-called single, double and quad machines are also employed in the art. Glass gobs are delivered substantially simultaneously to the blank molds 30 of a given machine section, and are delivered to the blank molds of the several machine sections in the so-called firing order or sequence for which the system is designed. Glass gobs are simultaneously formed into parison blanks in molds 30, and are simultaneously transferred by associated invert arms from blank molds 30 to blow molds 32. At blow molds 32. the parison blanks are blown to final form while the next series of parison blanks are formed in blank molds 30. As the next series of parison blanks are transferred by the invert arms to blow molds 30. the finished ware is transferred from blow molds 30 by takeout tongs to the deadplate of a sweepout station 34. The several sweepout stations 34 are operated in sequence to deliver finished ware to cross conveyor 22 (FIG. 1).

To the extent thus far described, IS machine glassware forming system 10 is of conventional construction. Reservoir 12 and needle mechanism 14 may be as shown, for example, in U.S.-A-3,419,373. In a currently preferred embodiment of the invention, needle mechanism 14 is as disclosed in US-A-5 885 317. Gob shear mechanism 16 may be as in U.S.-A-3,758,286 or 4,499,806, or more preferably as shown in U.S.-A-5 573 570. Gob distributor 18 may be as in U.S.-A-4,529,431 or 5,405,424. U.S.-A-4,362,544 and 4,427,431 illustrate typical IS machines 20. and U.S.-A-4,199,344, 4,222,480 and 5,160,015 illustrate typical sweepout stations. U.S.-A-4,193,784, 4,290,517, 4,793,465 and 4,923,363 illustrate suitable lehr loaders 24. U.S. 4,141,711, 4,145,204, 4,338,116, 4,364,764, 4.459,146 and 4,762,544 illustrate various arrangements for electronic control of glassware manufacture in an IS machine system. A system for controlling motions of IS machine operating mechanisms is illustrated, for example, in above-noted U.S.-A-4,548,637.

In accordance with the present invention, the gob sensors 40a. 40b, 40c (for a triple gob system) are positioned so as to sense passage of molten glass gobs from shear mechanism 16 to gob distributor 18. Sensors 40a-40c may be disposed at any suitable locations along the gob delivery paths, such as between gob shear mechanism 16 and the inlet scoops of gob distributor 18, or along the scoops, troughs or deflectors of gob distributor 18. A second set of gob sensors 42a, 42b, 42c is positioned so as to sense passage of molten glass gobs from gob distributor 18 to the associated blank molds 30 of each machine section 20a, 20b...20n. Sensors 42a, 42b, 42c may be positioned immediately adjacent to the blank molds, adjacent to the blank mold inlet baffles, or at the outlet ends of the gob distribution deflectors. The important point is that sensors 40a-40c and 42a-42c are so positioned as to provide signals indicative of travel time of molten gobs through gob distributor 18 and arrival of the molten gobs at the blank molds 30 of each machine section. Sensors 40a-40c and 42a-42c may be of any suitable type, such as those shown in U.S.-A-4,574,009, for example.

The several sensors 40a-40c and 42a-42c are connected through a multiplexer 44 (FIG. 3) to an electronic controller 46, which provides a control input to the multiplexer for selecting among the plurality of input sensor signals. Controller 46 also receives machine timing and reset signals for reference to timing of machine operation, and provides outputs to computerized section operator consoles or COMSOCs 48a, 48b...48n, which control operation of machine sections 20a, 20b...20n respectively. COMSOC units 48a-48n may be as shown in U.S.-A-4,364,764 and 4,459,146, for example. Controller 46 also receives an input from an operator keyboard 50, and provides an output to an operator display screen 52 for purposes as will be described, as well as for other conventional control purposes.

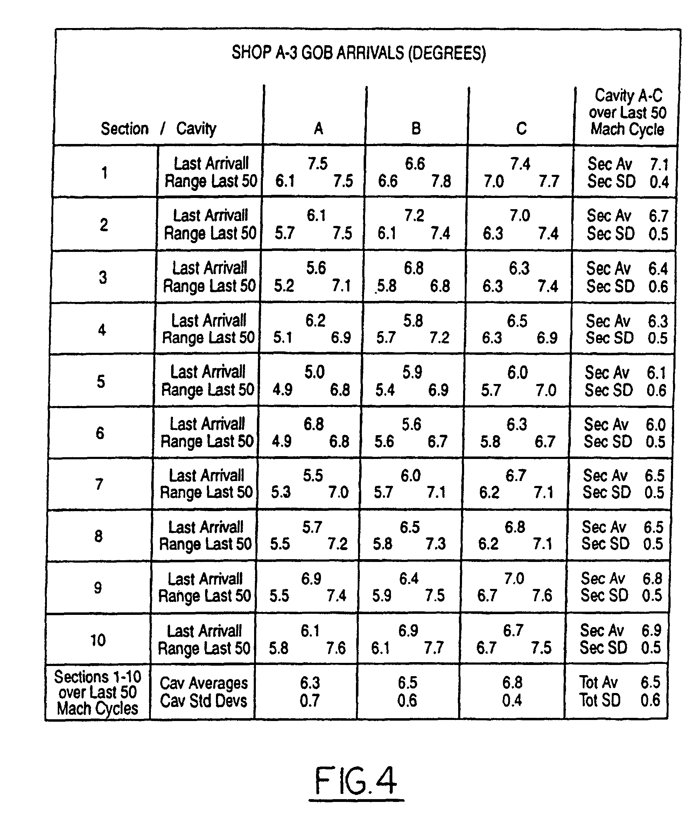

In operation, controller 46 monitors timing of signals from molten gob sensors 40a-40c and 42a-42c for two purposes: long term evaluation of gob delivery timing and controlled section shut-down in the event of a late gob delivery. Controller 46 operates through multiplexer 44 to poll the various sensors 40a-40c and 42a-42c so as to measure individually the time of passage of glass gobs through each delivery path to the blank molds 30 of each machine section. These travel times are stored within controller 46 so that each delivery path can be evaluated as to its condition for delivering glass gobs. and gradual deterioration of equipment due to dirt buildup, coating wear or other causes can be traced. For this purpose, an operator at keyboard 50 can selectively call for display of statistical gob arrival information at screen 52. For example. FIG. 4 illustrates a gob arrival evaluation display in which information is provided as to each blank mold cavity A. B and C for each machine section 1 through 10 of a triple-gob ten-section machine. All times in FIG. 4 are in units of machine degrees, computed by controller 46 (FIG. 3) based upon the machine timing and rest input signals. The display of FIG. 4 shows, for example, that the average arrival time in cavities A-C of section 1 over the last 50 machine cycles was 7.1 degrees, with a standard deviation of 0.4 degrees. Likewise, the average gob arrival time at cavities C for all sections 1-10 (which share common portions of the gob paths through distributor 18) over the last 50 machine cycles is 6.8 degrees, with a standard deviation of 0.4 degrees. Information of this character can be employed to evaluate deteriorating conditions, if any, in the gob distribution system. Other information, such as maximum and minimum delivery times, can also be computed and displayed.

A second feature of the present invention is to shut down a machine section in a controlled manner to allow the good partially formed glassware to be completed while disabling the mechanisms that would cause generation of tramp glass and potential blank mold damage. This is accomplished by computing gob arrival times at each blank mold of each section in real time as the gobs are delivered to the blank molds. If gob arrival timing exceeds a preset limit, controller 46 (FIG. 3) operates through the COMSOC 48a-48n associated with the blank mold in question to terminate operation of the blank molds of the section in question while continuing operation of the blow molds, takeout tongs and sweepout stations so as to complete forming of the glassware in process at that section. The shutdown limit may be determined empirically by observing a section at which gob loading is timely, and noting the gob arrival timing for that section. The blank mold baffle may then be operated manually at that section so as to be brought on earlier until a gob nips the baffle. Adding the number of degrees of change at the baffle required before gob interference to the previously noted normal arrival timing for the gob that interfered with the baffle will then be the shut-down limit setting. This setting may be entered into controller 46 by means of keyboard 50. Other techniques for calculating or empirically determining the shutdown limit may be employed. Exemplary machine stop and start routines are disclosed in above-referenced U.S.-A-4,364,764.

It will thus be seen that the present invention provides a method and system for monitoring and controlling individual section glassware forming system operation that fully satisfy all of the objects and aims previously set forth. Use of gob sensors 40a-40c is preferred for the purpose of eliminating other possible sources of timing errors not directly associated with gob travel time. It is also presently preferred to manipulate and display gob arrival times in terms of machine degrees so that such times can be more readily related to machine operation. However, gob arrival timing could as well be manipulated and/or displayed in units of real time. The system of the present invention may also be readily employed for monitoring other machine operating times. such as the so-called offset time between the machine index or reset pulse and timing of actual gob arrival. The system may also be employed to provide alarm signals to an operator in the event of deterioriation of gob arrival timing at one or more blank molds, which would provide an opportunity for remedial action and possible prevention of shutdown of one or more machine sections.

## Claims

1. A glassware forming system (10) that includes:
an individual section machine (20) having a plurality of stationary machine sections (20a to 20n), each with a plurality of blank molds (30) in which glass gobs are formed into blanks, a plurality of blow molds (32) in which blanks are formed into individual glassware, and means (34) for delivery of glassware from said blow molds, and
means (16) for delivering glass gobs to the blank molds of a section simultaneously and to each section in turn,
**characterized by** additionally comprising means for controlling said machine as a function of gob travel time, including:
first gob sensing means (40a to 40c) for sensing arrival of glass gobs at said means (18) for delivering glass gobs,
second gob sensing means (42a to 42c) at each said machine section for sensing arrival of glass gobs at the blank molds (30) of each said machine section in sequence,
means (44, 46) coupled to all of said gob sensing means for measuring gob travel time from said first gob sensing means (40 a to 40c), to each of said second gob sensing means (42a to 42c) in sequence,
means (46) coupled to said measuring means (44, 46) for determining when the gob travel time of a glass gob from said first gob sensing means (40a to 40c) to any of said second gob sensing means (42a to 42c) exceeds an associated preset limit, and
means (46, 48a to 48n) responsive to said determining means (46) for immediately terminating operation of the blank molds (30) of the machine section at which gob travel time exceeds the associated preset limit while permitting completion of a cycle of operation at the blow molds (32) and the glassware delivery means (34) of that section.

2. The system set forth in claim 1 wherein said operation terminating means (46, 48a to 48n) comprises means for terminating operation at all of said blank molds (30) in a machine section while permitting completion of a cycle at all of said blow molds (32) and said glassware delivery means (34) in that section when gob travel time at any one of said blank molds of that section exceeds said preset limit associated with that section.

3. The system set forth in claim 2 further comprising means (46) for storing gob travel time information for each said section over a plurality of machine cycles, and means (46) for evaluating such information for deterioration of operating conditions at said gob-delivering means (16).

4. The system set forth in damn 3 wherein said information-evaluating means (46) comprises means for determining average gob travel time at each of said blank molds (30) at each machine section, and means (52) for displaying said average gob travel time for each section to an operator.

5. The system set forth in claim 4 wherein said information evaluating means (46) further includes means for determining standard deviation of gob travel time at each of said blank
molds (30) at each said machine sections, and means for displaying said standard deviation of gob travel time for each section to an operator.

## Patentansprüche

1. Glasartikel-Formungssystem (10) mit folgenden Merkmalen:
eine IS-Maschine (20) weist eine Mehrzahl von stationären Maschinenabschnitten (20a bis 20n) auf, die jeweils mit einer Mehrzahl von Rohlingsformen (30), in welchen Glastropfen zu Rohlingen geformt werden, mit einer Mehrzahl von Blasformen (32), in welchen Rohlinge zu einzelnen Glasartikeln geformt werden, sowie mit Einrichtungen (34) zur Ausgabe der Glasartikel aus den Blasformen versehen sind, sowie
eine Einrichtung (16, 18) zur gleichzeitigen Ausgabe von Glastropfen an die Rohlingsformen eines Abschnitts und der Reihe nach an jeden Abschnitt,
**dadurch gekennzeichnet,**
**dass** zusätzlich Mittel zur Steuerung der Maschine in Funktion der Laufzeit der Glastropfen vorgesehen sind, umfassend:
erste Glastropfenerfassungseinrichtungen (40a bis 40c) zum Erfassen der Ankunft von Glastropfen an der Einrichtung (18) zur Ausgabe der Glastropfen;
zweite Glastropfenerfassungseinrichtungen (42a bis 42c) an jedem Maschinenabschnitt zum Erfassen der Ankunft von Glastropfen an den Rohlingsformen (30) jedes Maschinenabschnitts in der Abfolge,
Einrichtungen (44, 46), die mit allen diesen Glastropfenerfassungseinrichtungen gekoppelt sind, um die Laufzeit der Glastropfen von den ersten Glastropfenerfassungseinrichtungen (40a bis 40c) zu den zweiten Glastropfenerfassungseinrichtungen (42a bis 42c) in der Abfolge zu messen,
eine Einrichtung (46), die mit den Messeinrichtungen (44, 46) gekoppelt ist, um festzustellen, wann die Tropfenlaufzeit eines Glastropfen von den ersten Glastropfen-Erfassungseinrichtungen (40a bis 40c) zu einer der zweiten Glastropfen-Erfassungseinrichtungen (42a bis 42c) einen zugeordneten, zuvor festgesetzten Grenzwert überschreitet, und
Einrichtungen (46, 48a bis 48n), die auf die Bestimmungseinrichtung (46) ansprechen, indem sie den Betrieb der Rohlingsformen (30) des Maschinenabschnitts, an welchem die Tropfenlaufzeit den zugeordneten, zuvor festgesetzten Grenzwert überschreitet, sofort abzubrechen, während sie die Vollendung eines Betriebszyklus an den Blasformen (32) und der Glasartikel-Ausgabeeinrichtung (34) dieses Abschnitts gestatten.

2. System nach Anspruch 1, **dadurch gekennzeichnet,**
**dass** die den Betrieb abbrechenden Einrichtungen (46, 48a bis 48n) Einrichtungen umfassen, um den Betrieb an allen Rohlingsformen (30) in einem Maschinenabschnitt abzubrechen, während die Vollendung eines Zyklus an allen Blasformen (32) und den Glasartikel-Ausgabeeinrichtungen (34) in diesem Abschnitt gestattet wird, wenn die Tropfenlaufzeit an einer der Rohlingsformen dieses Abschnitts den diesem Abschnitt zugeordneten, zuvor festgesetzten Grenzwert überschreitet.

3. System nach Anspruch 2, **dadurch gekennzeichnet,**
**dass** es ferner eine Einrichtung (46) zur Speicherung von Informationen zur Tropfenlaufzeit für jeden Abschnitt über mehrere Maschinenzyklen hin umfasst, sowie eine Einrichtung (46) zur Bewertung dieser Informationen hinsichtlich der Verschlechterung von Betriebsbedingungen an der Tropfenausgabeeinrichtung (18).

4. System nach Anspruch 3, **dadurch gekennzeichnet,**
**dass** die Informationsbewertungseinrichtung (46) eine Einrichtung zur Bestimmung der mittleren Tropfenlaufzeit an jeder der Rohlingsformen (30) in jedem Maschinenabschnitt sowie eine Einrichtung (52) zur Anzeige der mittleren Tropfenlaufzeit für jeden Abschnitt für eine Betriebsperson umfasst.

5. System nach Anspruch 4, **dadurch gekennzeichnet,**
**dass** die Informationsbewertungseinrichtung (46) ferner eine Einrichtung zur Bestimmung der Standardabweichung der Tropfenlaufzeit an jeder der Rohlingsformen (30) in jedem Maschinenabschnitt sowie eine Einrichtung zur Anzeige der Standardabweichung der Tropfenlaufzeit für jeden Abschnitt für eine Betriebsperson umfasst.

## Revendications

1. Système de formation (10) d'articles en verre, comprenant :
une machine de section individuelle (20) ayant une pluralité de sections de machine statiques (20a à 20n), chacune munie d'une pluralité de moules ébaucheurs (30) dans lesquels des paraisons de verre sont transformées en ébauches, une pluralité de moules finisseurs (32) dans lesquels les ébauches sont transformées en articles en verre individuels, et un moyen (34) permettant la sortie des articles en verre desdits moules finisseurs, et
un moyen (16) pour faire passer les paraisons de verre aux moules ébaucheurs d'une section simultanément et à chaque section l'une après l'autre,
**caractérisé en ce qu'**il comprend en outre un moyen pour commander ladite machine en fonction du temps de parcours des paraisons, comprenant :
un premier moyen de détection (40a à 40c) de paraison pour détecter l'arrivée de paraisons de verre au niveau dudit moyen (18) servant à faire passer les paraisons de verre,
un deuxième moyen de détection (42a à 42c) de paraison en chacune desdites sections de machine pour détecter l'arrivée de paraisons de verre au niveau des moules ébaucheurs (30) de chacune desdites sections de machine en séquence,
un moyen (44, 46) couplé à tous lesdits moyens de détection de paraisons pour mesurer le temps de parcours des paraisons dudit premier moyen de détection (40a à 40c) de paraison à chacun desdits deuxièmes moyens de détection (42a à 42c) de paraison en séquence,
un moyen (46) couplé audit moyen de mesure (44, 46) pour déterminer quand le temps de parcours de paraison d'une paraison de verre dudit premier moyen de détection (40a à 40c) de paraison à l'un quelconque desdits deuxièmes moyens de détection (42a à 42c) de paraison dépasse une limite préétablie associée, et
un moyen (46, 48a à 48n) réagissant audit moyen de détermination (46) pour arrêter immédiatement le fonctionnement des moules ébaucheurs (30) de la section de machine dans laquelle le temps de parcours de paraison dépasse la limité préétablie associée tout en permettant l'achèvement d'un cycle de fonctionnement au niveau des moules finisseurs (32) et du moyen permettant la sortie (34) des articles en verre de cette section.

2. Système selon la revendication 1, dans lequel ledit moyen d'arrêt du fonctionnement (46, 48a à 48n) comprend un moyen pour arrêter le fonctionnement au niveau de tous lesdits moules ébaucheurs (30) dans une section de machine tout ,en permettant l'achèvement d'un cycle au niveau de tous lesdits moules finisseurs (32) et dudit moyen permettant la sortie (34) des articles en verre dans cette section quand le temps de trajet de paraison au niveau de l'un quelconque desdits moules ébaucheurs de cette section dépasse ladite limite préétablie associée à cette section.

3. Système selon la revendication 2, comprenant en outre un moyen (46) pour mémoriser une information de temps de parcours des paraisons pour chacune desdites sections sur une pluralité de cycles de machine, et un moyen (46) pour évaluer cette information pour la détérioration des conditions de marche au niveau dudit moyen (16) pour faire passer les paraisons.

4. Système selon la revendication 3, dans lequel ledit moyen d'évaluation (46) d'information comprend un moyen pour déterminer le temps de parcours moyen de paraison en chacun desdits moules ébaucheurs (30) à chaque section de machine, et un moyen (52) pour afficher à un opérateur ledit temps de parcours moyen de paraison pour chaque section.

5. Système selon la revendication 4, dans lequel ledit moyen d'évaluation (46) d'information comprend en outre un moyen pour déterminer l'écart type du temps de parcours de paraison en chacun desdits moules ébaucheurs (30) à chacune desdites sections de machine, et un moyen pour afficher à un opérateur ledit écart type du temps de parcours de paraison pour chaque section.
